# EUROPÄISCHE PATENTANMELDUNG

(11) **EP 3 755 023 A1**
(43) Veröffentlichungstag der Anmeldung: **23.12.2020**
(21) Anmeldenummer: 19180443.4
(22) Anmeldetag: 17.06.2019
(51) Int. Cl.: H04W 12/06, H04W 88/06, H04L 29/06

(54) **VERFAHREN ZUR KONFIGURATION EINER FUNKVERBINDUNG**

(71) Anmelder: Siemens Aktiengesellschaft, 80333 München (DE)
(72) Erfinder: Falk, Rainer, 85586 Poing (DE)

(57) **Zusammenfassung**

Verfahren zur Konfiguration einer Funkverbindung (13) zwischen einem Mobilfunkendgerät (10) und einem Mobilfunknetzwerk (30), wobei das Mobilfunknetzwerk (30) mindestens ein erstes Teilnetz (20) enthält, das mit einem Berechtigungsnachweis von mindestens einem ersten Typ (11) zugänglich ist, und mindestens ein zweites Teilnetz (11) enthält, das mit einem Berechtigungsnachweis von mindestens einem zweiten Typ (12) zugänglich ist, und eine erste Funkverbindung (13) zu einem ersten Teilnetz (20) und eine zweite Funkverbindung (14) zu einem zweiten Teilnetz (22) unterschiedliche Funkübertragungsparameter aufweisen, wobei bei einer Zugangsanforderung des Mobilfunkendgeräts (10) an ein ausgewähltes Teilnetz
- ein für die Zugangsanforderung zum ausgewählten Teilnetz vorbestimmter Berechtigungsnachweis ermittelt wird (S1),
- der Typ des vorbestimmten Berechtigungsnachweises ermittelt wird (S2), und
- mindestens ein Funkübertragungsparameter abhängig vom ermittelten Typ des vorbestimmten Berechtigungsnachweises ausgewählt und aktiviert (S4, S4') wird.

## Beschreibung

Die Erfindung betrifft ein Verfahren, ein Mobilfunkendgerät, einen Netzzugangsknoten sowie ein Computerprogrammprodukt zur Konfiguration einer Funkverbindung zwischen einem Mobilfunkendgerät und einem Mobilfunknetzwerk.

Ein Teilnehmer eines Mobilfunknetzwerks muss sich üblicherweise bei einem Netzwerkzugang gegenüber dem Mobilfunknetzwerk authentisieren. Ein Teilnehmer kann dabei eine menschliche Person des Mobilfunkendgerätes sein. Ein Teilnehmer kann aber auch ein Gerät, beispielsweise ein Gerät in einem Internet der Dinge, sein. Der Teilnehmer ist üblicherweise für eine Auswahl von Diensten subskribiert, die von einem Mobilfunkendgerät über eine Funkverbindung zum Mobilfunknetz zugänglich sind. Die Authentisierung beim Zugang zum Mobilfunknetz kann zum Beispiel bei einem schnurlosen lokalen Zugangsnetz, auch WLAN genannt, mittels einem Pre-Shared-Key (PSK) oder einem digitalen Zertifikat, einem Passwort oder einem anderen erweiterbaren Authentisierungsprotokoll (EAP) erfolgen. Eine solche Zugangsauthentisierung kann auch von kleineren oder größeren Firmen, die nicht auf das Betreiben eines Mobilfunknetzes spezialisiert sind, eingerichtet und betrieben werden.

Bei zellulären Mobilfunknetzwerken nach einem Standard des dritte Generations-Partnerschaftsprojekts (3GPP) der zweiten Generation (Global System for Mobile Communication, GSM), der dritten Generation (Universal Mobil Telekommunikation System, UMTS), der vierten Generation (Long Term Evolution, LTE) und der derzeit aktuellen fünften Generation (5G)erfolgt dagegen eine Zugangsauthentisierung als Teilnehmerauthentisierung mittels eines Teilnehmeridentifizierungsmoduls (Subscriber Identifikation Module SIM, Universal Subscriber Identifikation Module USIM oder einer IP Multimedia Service Identifizierungsmodul ISIM). Die eigentliche Authentisierung erfolgt dabei mittels eines symmetrischen Schlüssels. Das Teilnehmeridentifizierungsmodul ist im Allgemeinen ein Chipkartenbasiertes Sicherheitsmodul. Es führt zur Authentisierung kryptografische Operationen durch und stellt dem Mobilfunkendgerät einen oder mehrere Sitzungsschlüssel bereit, um die Nutzerkommunikation insbesondere auf der Funkverbindung kryptographisch zu schützen.

Ein solches in zellulären Mobilfunknetzwerken verwendetes Teilnehmeridentifizierungsmodul wird für weitere Funktionen verwendet. Es enthält zum Beispiel Konfigurationsdaten zu bevorzugten Netzwerken. Das Teilnehmeridentifizierungsmodul wird von einem Mobilfunkanbieter herausgegeben, provisioniert und im laufenden Betrieb verwaltet. Die Technologie dafür ist jedoch äußerst komplex, sodass sie in der Praxis nur von auf Mobilfunk spezialisierten Netzbetreibern nutzbar ist.

Insbesondere im Umfeld von 5G-Mobilfunknetzwerken werden neben einem räumlich ausgedehnten, öffentlich zugänglichen Mobilfunknetz auch Anwendungsszenarien diskutiert, bei denen die 5G-Mobilfunktechnologie ähnlich wie ein WLAN genutzt werden soll. Dies wird auch als private 5G-Anwendung oder als 5G-Campusnetz bezeichnet. Dadurch kann zum Beispiel in einem regional oder geographisch begrenzten Gebiet, beispielsweise einer Werkshalle, einem Industriepark, einem Stadtnetz oder Ähnlichem, ein lokales, auf 5G-Technologie basierendes Mobilfunknetzwerk betrieben werden. Solche 5G Campusnetze bzw. lokalen 5G-Anwendungen werden im weiteren als private Mobilfunknetze bezeichnet.

Ein Hindernis für eine praktikable, einfache Nutzung solcher privaten 5G-Anwendungen stellt jedoch der hohe Aufwand dar, der für die Erstellung, Provisionierung und Verwaltung des Teilnehmeridentifizierungsmoduls zum sicheren Netzwerkzugang verbunden ist. Zum anderen muss sichergestellt werden, dass Mobilfunkendgeräte bzw. Mobilfunkmodems, die insbesondere für Datennetze die Funkverbindung und den Zugang zu einem Mobilfunknetzwerk bereitstellen, auf die Funkparameter des gewünschten privaten 5G-Anwendungsnetzes einstellbar und insbesondere einschränkbar sind. Dabei sollte gewährleistet werden, dass das öffentliche zellulare Mobilfunknetzwerk insbesondere bezüglich der Funkverbindungen nicht gestört wird.

Es ist somit die Aufgabe der vorliegenden Erfindung, einem Mobilfunkendgerät einen einfach zu verwaltenden, sicheren Netzwerkzugang zu einem Teilnetz des Mobilfunknetzes zu ermöglichen, ohne die Funkverbindungen in einem anderen Teilnetz des Mobilfunknetzwerks, insbesondere einem allgemein zugänglichen Teil des Mobilfunknetzwerks, zu stören.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur Konfiguration einer Mobilfunkverbindung zwischen einem Mobilfunkendgerät und einem Mobilfunknetzwerk, wobei das Mobilfunknetzwerk mindestens ein erstes Teilnetz enthält, das mit einem Berechtigungsnachweis von mindestens einem ersten Typ zugänglich ist, und mindestens ein zweites Teilnetzwerk enthält, das mit einem Berechtigungsnachweis von mindestens einem zweiten Typ zugänglich ist, und eine erste Funkverbindung zu einem ersten Teilnetzwerk und eine zweite Funkverbindung zu einem zweiten Teilnetzwerk unterschiedliche Funkübertragungsparameter aufweisen, wobei bei einer Zugangsanforderung eines Mobilfunkendgerätes an ein ausgewähltes Teilnetz ein für die Zugangsanforderung zum ausgewählten Teilnetz vorbestimmter Berechtigungsnachweis ermittelt wird, der Typ des verwendeten Berechtigungsnachweises ermittelt wird, und mindestens ein Funkübertragungsparameter abhängig vom ermittelten Typ des vorbestimmten Berechtigungsnachweises ausgewählt und aktiviert wird.

Dadurch kann erreicht werden, dass ein Mobilfunkendgerät mit einem Berechtigungsnachweis der ersten Art, beispielsweise einem als SIM-Karte mit USIM oder ISIM-Funktionalität ausgebildeten Teilnehmeridentifikationsmodul, alle in einem ersten Teilnetzwerk technisch unterstützten Funkzugangsvarianten aktivieren und verwenden kann. Wird dagegen ein Berechtigungsnachweis von einem zweiten Typ ermittelt, werden lediglich die Funkübertragungsparameter ausgewählt, die durch diesen Berechtigungsnachweis vom zweiten Typ bestimmt sind. Somit kann das Mobilfunkendgerät zwar variabel und einstellbar bezüglich der unterstützten Funkübertragungsparameter ausgebildet sein, eine unpassende oder fehlerhafte Einstellung der Funkübertragungsparameter insbesondere bei Verwendung von privaten Teilnetzwerken kann aber vermieden werden. Es ist nicht erforderlich, dass ein Teilnehmer die Funktechnologien des Mobilfunkendgerätes, die unterstützt werden sollen, selbst konfiguriert.

In einer vorteilhaften Ausführungsform sind der erste Berechtigungsnachweis und der zweite Berechtigungsnachweis zur Verwendung in unterschiedlichen Authentisierungsprotokollen ausgebildet.

Beispielsweise wird der Berechtigungsnachweis vom ersten Typ in einem durch ein 4G oder 5G standardisiertes Authentisierungsprotokoll verwendet, der Berechtigungsnachweis vom zweiten Typ wird aber beispielsweise in einem erweiterten Anwendungsprotokoll mit einem Transportschichtsicherheitsprotokoll EAP-TLS, das insbesondere bei einer Authentisierung in einem schnurlosen lokalen Bereichsnetz WLAN genutzt wird, verwendet. Der Berechtigungsnachweis vom ersten Typ wird beispielsweise durch eine SIM-Karte bereitgestellt, die entweder als vom Mobilfunkendgerät lösbare oder in das Mobilfunkendgerät integrierte Komponente ausgebildet ist. Dies hat den Vorteil, dass durch die verwendeten Berechtigungsnachweise bzw. die damit verbundenen unterschiedlichen Authentisierungsprotokolle eine Unterscheidung der Funkübertragungsparameter und damit der physikalische Zugang zu unterschiedlichen Teilnetzen erkannt und unterschieden werden kann.

In einer vorteilhaften Ausführungsform werden die erste Funkverbindung und die zweite Funkverbindung mit einem gleichen Übertragungsverfahren bereitgestellt.

In einem 5G-Mobilfunknetzwerk werden beispielsweise erste Funkverbindungen und zweite Funkverbindungen durch das gleiche Funkübertragungsverfahren bereitgestellt, wobei sich jedoch die erste und zweite Funkverbindung in ihren Funkparametern, wie beispielsweise in den verwendeten Frequenzbändern, der zulässigen Sendeleistung, der Bandbreite pro Übertragungskanal oder auch dem Modulationsverfahren bzw. in den Parametern eines Modulationsverfahrens unterscheiden. Ein Beispiel für ein solches Funkübertragungsverfahren ist 5G New Radio (5G NR), das in dem Standard 3GPP TS38.300 beschrieben ist. Dies erlaubt es insbesondere, dass ein Mobilfunkendgerät bzw. ein Teilnehmer mit einem einzigen Mobilfunkendgerät Zugang zu verschiedenen Teilnetzen erhalten kann und dabei aber automatisch die Funkübertragungsparameter für das gleiche Funkübertragungsverfahren durch die unterschiedlichen Berechtigungsnachweise festgelegt sind und entsprechend eingestellt werden.

In einer vorteilhaften Ausführungsform ist das Mobilfunknetzwerk ein zellulares Mobilfunknetz, insbesondere ein 5G-Netzwerk gemäß einem Standard eines dritten Generationspartnerschaftsprojekts 3GPP und das erste Teilnetz ist ein öffentliches Mobilfunknetzwerk und das zweite Teilnetz ist ein nicht-öffentliches Mobilfunknetzwerk.

Ein öffentliches Mobilfunknetz ist dabei für einen Teilnehmer, der bei einem Betreiber für den Zugang zum Mobilfunknetzwerk subskribiert ist, allgemein zugänglich. Ein solches öffentliches Mobilfunknetz ist üblicherweise in einem geographisch ausgedehnten Bereich zugänglich. Ein nicht-öffentliches Mobilfunknetz ist im Gegensatz dazu üblicherweise in einem geographisch stark eingeschränkten Bereich zugänglich. Das erste und das zweite Teilnetz unterscheiden sich dadurch, dass Funkverbindungen zum ersten bzw. zweiten Teilnetz mindestens einen unterschiedlichen Funkübertragungsparameter aufweisen. Somit kann insbesondere ein allgemein zugängliches, öffentliches erstes Teilnetz von einem lediglich lokal zugänglichen, nicht-öffentlichen zweiten Teilnetz, beispielsweise einem 5G-Campusnetz oder 5G-Industrienetz, auch bezüglich der Zugangsberechtigungsnachweis unterschieden werden und daraus die entsprechenden Funkübertragungsparameter automatisch ermittelt werden.

In einer vorteilhaften Ausführungsform wird die Zugangsanforderung bei einem Start und/oder im laufenden Betrieb eines Mobilfunkendgerätes oder eines Netzzugangsknotens oder eines mit dem Mobilfunkendgerät verbundenen Maschine und/oder bei einer Authentisierung des Mobilfunkendgeräts bei einem Teilnetz ausgeführt. Die Maschine kann beispielsweise eine Werkzeugmaschine, eine Fräsmaschine, ein 3D-Drucker für eine additive Fertigung, ein Roboter oder ein führerloses Transportsystem sein.

Dies hat den Vorteil, dass bereits beim Start, also beim Anschalten oder Aktivieren eines Mobilfunkendgerätes, ein bestimmtes Teilnetzwerk zum Zugang bei einem Mobilfunkendgerät ermittelt wird, und über den ermittelten Berechtigungsnachweis am Mobilfunkendgerät oder auch am Netzzugangsknoten automatisch die entsprechenden Funkübertragungsparameter ausgewählt und aktiviert werden. Insbesondere kann beim Start des Mobilfunkgeräts überprüft werden, ob die vor einem Ausschalten aktivierten Funkübertragungsparameter mit den bei einem Neustart im Mobilfunkendgerät vorliegenden Berechtigungsnachweisen noch erlaubt sind. Sobald bei einer Anforderung eines Dienstes ein konkreter Berechtigungsnachweis ermittelt wird, werden die Funkübertragungsparameter abhängig vom ermittelten Typ des Berechtigungsnachweises eingestellt. Weiterhin ist es möglich, dass zusätzlich der Typ eines vom Netzwerk verwendeter Berechtigungsnachweises ermittelt und ausgewertet wird, um davon abhängig zumindest einen Funkübertragungsparameter auszuwählen und zu aktivieren.

Durch eine Überprüfung im laufenden Betrieb, beispielsweise in periodisch wiederkehrenden Zeitpunkten oder durch bestimmte Ereignisse getriggert, wird eine Zugangsanforderung durchgeführt und dabei werden die Funkübertragungsparameter überprüft. Die Zugangsanforderung kann aber auch bei einem Start oder im laufenden Betrieb durch einen Netzzugangsknoten ausgelöst werden. Insbesondere wird die Zugangsanforderung bei einer Authentisierung des Mobilfunkendgeräts bei einem Teilnetz ausgeführt. Entsprechend wird bei einer Netzwerkzugangsauthentisierung der Berechtigungsnachweis für eine Teilnehmerauthentisierung und beispielsweise eine zusätzliche Schlüsselvereinbarung verwendet.

In einer vorteilhaften Ausführungsform ist der Berechtigungsnachweis vom zweiten Typ ein digitales Zertifikat und wird zur Authentisierung des Mobilfunkendgeräts bei einem Zugang zum Mobilfunknetzwerk verwendet.

Ein digitales Zertifikat, beispielsweise entsprechend einem X.509 Standard der internationalen Telekommunikationsunion ITU-T, wird beispielsweise in einem WLAN häufig zur Authentifizierung der Kommunikationspartner verwendet. Dabei ist insbesondere vorteilhaft, dass eine Vergabe und Verwaltung der digitalen Zertifikate automatisiert, in einfacher Weise und durch bekannte, wiederverwendbare Prozeduren erfolgt. Somit kann ein privater Betreiber eines zweiten Teilnetzes vom zweiten Typ einfach und mit geringem Aufwand die Bereitstellung von Berechtigungsnachweisen vom Typ 2 selbst durchführen. Das mit einem größeren administrativen Aufwand verbundene Zugangsberechtigungsverfahren mittels einem Teilnehmeridentifizierungsmodul (SIM, USIM, ISIM, 5G SIM) beziehungsweise einem 3GPP-AKA-Protokoll (AKA: Authentication and Key Agreement) unter Nutzung des Teilnehmeridentifizierungsmoduls, ist somit hinfällig.

Das digitale Zertifikat kann insbesondere zur Teilnehmer- bzw. Mobilfunkendgeräte-Authentisierung und bevorzugter Weise auch die Aushandlung eines Sitzungsschlüssels in einem EAP-TLS Protokoll verwendet werden. Ein digitales Zertifikat kann jedoch auch bei Authentisierungsprotokollen entsprechend einem IP-Security-Protokoll IPsec/IKEv2 oder einem Transportschichtsicherheitsprotokoll TLS, DTLS verwendet werden.

In einer vorteilhaften Ausführungsform enthält der Berechtigungsnachweis vom zweiten Typ eine beschränkende Information zu nicht erlaubten Funkübertragungsparametern und entsprechende Funkübertragungsparameter werden nicht aktiviert.

Dies hat den Vorteil, dass ein durch die Randpunkte der nicht erlaubten Funkübertragungsparameterbereiche erlaubte Bereiche gegeben sind, innerhalb derer die Funkübertragungsparameter durch das Gerät ausgewählt und verwendet werden können. Dies ermöglicht eine Wahlfreiheit der Funkübertragungsparameter außerhalb der im Berechtigungsnachweis vom zweiten Typ gegebenen beschränkenden Information.

In einer vorteilhaften Ausführungsform enthält der Berechtigungsnachweis vom zweiten Typ eine Positiv-Information zu erlaubten Funkübertragungsparametern und lediglich erlaubte Funkübertragungsparameter werden aktiviert.

Dies ermöglicht eine genaue Vorgabe der erlaubten Funkübertragungsparameter und reduziert eine Anpassung der Funkübertragungsparameter bei Änderungen innerhalb der nicht erlaubten Bereiche von Funkübertragungsparametern.

In einer vorteilhaften Ausführungsform enthält der Berechtigungsnachweis vom zweiten Typ eine zusätzliche Information zu einem geografischen Anwendungsbereich und/oder einem zeitlichen Anwendungsbereich der Funkübertragungsparameter.

Der Zugang zu einem zweiten Teilnetzwerk kann somit auch auf ein geografisches Gebiet und/oder Zeiträume eingegrenzt werden, auf die sich die beschränkende oder Positiv-Informationen beziehen. Zusätzlich können auch ein Netzwerkname oder eine Kennung von Netzzugangsknoten enthalten sein, für die ein Netzwerkzugang erlaubt bzw. unzulässig ist.

In einer vorteilhaften Ausführungsform ist eine vorbestimmte Information, die einen vorbestimmten Satz von Funkübertragungsparametern aufweist, dem Berechtigungsnachweis vom Typ 2 zugeordnet und der vorbestimmte Satz von Funkübertragungsparametern wird aktiviert, wenn im Berechtigungsnachweis vom Typ 2 keine Information zu den Funkübertragungsparametern enthalten ist.

Dies hat den Vorteil, dass auch bei nicht explizit vorhandener Information zu den Funkübertragungsparametern innerhalb des Berechtigungsnachweises vom Typ 2 eine Information zu möglichen Funkübertragungsparametern für den Zugang zu den gewählten Teilnetzwerk bestimmt sind. Somit wird verhindert, dass beim Zugang zu einem zweiten Teilnetz Funkübertragungsparameter von öffentlichen Teilnetzen des Mobilfunknetzwerks verwendet werden und somit das öffentliche Teilnetz durch das Mobilfunkendgerät gestört werden.

In einer vorteilhaften Ausführungsform ermittelt ein Netzzugangsserver bei einer Netzzugangsauthentisierung des Mobilfunkendgeräts die Funkübertragungsparameter aus dem Berechtigungsnachweis vom Typ 2, wobei ein Netzwerkzugang nur dann gewährt wird, wenn die Funkübertragungsparameter der Funkverbindung vom Mobilfunkendgerät zum Netzzugangsknoten den ermittelten Funkübertragungsparametern des Berechtigungsnachweises vom Typ 2 entsprechen.

Dies hat den Vorteil, dass keine zusätzliche Nachricht zur Übermittlung der Information zu den Funkübertragungsparametern an den Netzzugangsserver gesendet werden muss, da der Berechtigungsnachweis zur Netzzugangsauthentisierung an den Netzzugangsserver gesendet und dort ausgewertet wird.

In einer vorteilhaften Ausführungsform ermittelt der Netzzugangsknoten die Funkübertragungsparameter der Funkverbindung zum Mobilfunkendgerät, und stellt die ermittelten Funkübertragungsparameter dem Netzzugangsserver oder dem Netzzugangsknoten zum Vergleich mit den Funkübertragungsparametern aus dem Berechtigungsnachweis vom Typ 2 bereit.

Dies hat den Vorteil, dass die Funkverbindung vom Mobilfunkendgerät zum Netzzugangsknoten bezüglich ihrer Funkübertragungsparameter ermittelt und somit eine Überprüfung der aktuell vorliegenden Funkübertragungsparameter gegenüber den im Berechtigungsnachweis vom Typ 2 vorliegenden oder ihm zugewiesenen Funkübertragungsparameter übereinstimmt.

Mit Funkübertragungsparameter sind beispielsweise Angaben zur Funktechnologie beispielsweise LTE, 5G-NR (3GPP 5G New Radio), WLAN oder auch gemäß einem WiMAX-Standard. Funkübertragungsparameter können auch einen Frequenzbereich bzw. ein Frequenzband, ein Modulationsverfahren, eine maximale Sendeleistung, eine Angabe zum Verhältnis von Sendezeiten zu Nichtsendezeiten, auch als Duty Cycle bezeichnet, oder Antennenparameter umfassen. Antennenparameter sind beispielsweise Angaben zur Form eines Sendestrahls, ein sogenanntes Beam-Forming, oder zur Antennenkonfiguration, beispielsweise von Mehrantennensystemen insbesondere von Multiple-In und Multiple-Out-Antennensystemen (MIMO), bei denen ein Beam-Forming zur Basisstation verwendet werden muss, um andere Teilnehmer nicht zu stören.

Ein zweiter Aspekt der Erfindung betrifft ein Mobilfunkendgerät zur Konfiguration einer Funkverbindung zu einem Mobilfunknetzwerk mindestens ein erstes Netzwerk enthält, das mit einem Berechtigungsnachweis von mindestens einem ersten Typ zugänglich ist und mindestens ein zweites Teilnetz enthält, das mit einem Berechtigungsnachweis von mindestens einem zweiten Typ zugänglich ist und eine erste Funkverbindung zu einem ersten Teilnetz und eine zweite Funkverbindung zu einem zweiten Teilnetz unterschiedliche Funkübertragungsparameter aufweisen, umfassend mindestens einen Prozessor, der derart ausgebildet ist, bei einer Zugangsanforderung des Mobilfunkendgeräts an ein ausgewähltes Teilnetz einen für die Zugangsanforderung zum ausgewählten Teilnetz vorbestimmten Berechtigungsnachweis zu ermitteln, den Typ des vorbestimmten Berechtigungsnachweises zu ermitteln und mindestens einen Funkübertragungsparameter abhängig vom ermittelten Typ des verwendeten Berechtigungsnachweises auszuwählen und zu aktivieren.

Dies hat den Vorteil, dass ein Mobilfunkendgerät einen weiten Bereich von Funkübertragungsparametern und somit Funktechnologien unterstützt, jedoch abhängig vom Teilnetzwerk, zu dem ein Zugang mittels eines Berechtigungsnachweises angefordert wird, bereits durch die mit dem Berechtigungsnachweis, insbesondere vom Typ 2, verbundenen Funkübertragungsparametern die Funkverbindung aufbaut. Das Mobilfunkendgerät kann somit für Teilnetze mit unterschiedlichen Funkübertragungsparametern verwendet werden und es erfolgt eine automatische Anpassung der verwendeten Funkübertragungsparameter an das Teilnetzwerk, zu dem ein Zugang angefordert wird. So werden beispielsweise für den Zugang zu einem zweiten Teilnetz lediglich Frequenzbänder, die für zweite Teilnetze freigegeben sind, verwendet.

Ein dritter Aspekt betrifft einen Netzzugangsknoten, der eine Funkverbindung von einem Mobilfunkendgerät terminiert, zur Konfiguration einer Funkverbindung zwischen einem Mobilfunkendgerät und einem Mobilfunknetzwerk, wobei das Mobilfunknetzwerk mindestens ein erstes Netzwerk enthält, das mit einem Berechtigungsnachweis von mindestens einem ersten Typ zugänglich ist und mindestens ein zweites Teilnetz enthält, das mit einem Berechtigungsnachweis von mindestens einem zweiten Typ zugänglich ist, und eine erste Funkverbindung zu einem ersten Teilnetz und eine zweite Funkverbindung zu einem zweiten Teilnetz unterschiedliche Funkübertragungsparameter aufweisen, umfassend mindestens einen Prozessor, der derart ausgebildet ist, bei einer Zugangsanforderung des Mobilfunkendgeräts an ein ausgewähltes Teilnetz
- einen für die Zugangsanforderung zum ausgewählten Teilnetz (20, 22) vorbestimmten Berechtigungsnachweis zu ermitteln,
- den Typ (11, 12) des vorbestimmten Berechtigungsnachweises zu ermitteln, und
- mindestens einen Funkübertragungsparameter abhängig vom ermittelten Typ des verwendeten Berechtigungsnachweises auszuwählen und zu aktivieren.

Ein Netzzugangsknoten kann dabei eine Funkverbindung physikalisch terminieren und entsprechend beispielsweise ein NodeB eines 3G- oder 4G- oder 5G-Mobilfunknetzes oder ein Zugangspunkt, auch Access Point, eines WLAN Netzes sein. Ein Netzzugangsknoten kann die Funkverbindung auch bzgl. des verwendeten Signalisierungsprotokolls terminieren. Dementsprechend ist ein Netzzugangsknoten ein Funknetzwerk-Controller, auch Radio Network Controller RNC eines 3G- oder 4G Mobilfunknetzes oder eine Access Management Function eine 5G Mobilfunknetzes. Entsprechendes gilt für Netzknoten beispielsweise eines WLAN oder WiMAX Netzwerks. Der Netzzugangsknoten kann somit in gleicher Weise wie das Mobilfunkendgerät die erlaubten Funkparameter für die Funkverbindung ermitteln und aktivieren.

Ein vierter Aspekt der Erfindung betrifft ein Computerprogrammprodukt, umfassend ein computerlesbares Medium, das direkt in einen Speicher eines digitalen Computers ladbar ist, umfassend Programmcodeteile, die dazu geeignet sind, die Schritte des vorgenannten Verfahrens durchzuführen.

Ein Mobilfunkendgerät kann beispielsweise als ein Mobilfunkmodem ausgebildet sein, das eine Funkverbindung zum Mobilfunknetzwerk aufbaut und bereitstellt. Das Mobilfunkmodem kann beispielsweise mit weiteren Maschinen, die keine eigene Funkübertragungskomponente aufweisen, verbunden sein und eine Kommunikation zwischen den anderen Geräten und dem Mobilfunknetzwerk bereitstellen. Andere Maschinen können beispielsweise eine Werkzeugmaschine, eine Fräsmaschine, ein 3D-Drucker, ein Roboter, ein autonomes Fahrzeug oder ein führerloses Transportsystem sein. Ein Mobilfunkendgerät kann aber auch mit einem Teilnehmer in Form einer menschlichen Person verbunden sein, die das Mobilfunkendgerät zur Kommunikation mit dem Mobilfunknetzwerk nutzt.

Unter einem Prozessor kann im Zusammenhang mit der Erfindung ein oder mehrere Einzelprozessoren verstanden werden. Bei einem Prozessor kann es sich insbesondere um einen Hauptprozessor, einen Mikroprozessor oder Mikrokontroller oder einem digitalen Signalprozessor handeln.

Ein Computerprogrammprodukt, wie zum Beispiel ein Computerprogrammmittel, kann beispielsweise als Speichermedium, wie zum Beispiel als Speicherkarte, oder auch in Form einer herunterladbaren Datei von einem Server in einem Netzwerk bereitgestellt oder geliefert werden.

Die für das vorgeschlagene Verfahren beschriebenen Ausführungsformen und Merkmale gelten für das vorgeschlagene Mobilfunkendgerät sowie den Netzwerkzugangsknoten entsprechend.

Ausführungsbeispiele des erfindungsgemäßen Verfahrens, eines erfindungsgemäßen Mobilfunkendgerätes sowie eines Netzzugangsknotens sind in den Zeichnungen beispielhaft dargestellt und werden anhand der nachfolgenden Beschreibung näher erläutert. Es zeigen:
- Fig. 1: ein Mobilfunknetzwerk mit einem Ausführungsbeispiel eines erfindungsgemäßen Mobilfunkendgeräts in schematischer Darstellung;
- Fig. 2: ein erstes Ausführungsbeispiel des erfindungsgemäßen Verfahrens als Ablaufdiagramm;
- Fig. 3: ein zweites Ausführungsbeispiel des erfindungsgemäßen Verfahrens als Nachrichtenablaufdiagramm;
- Fig. 4: ein drittes Ausführungsbeispiel des erfindungsgemäßen Verfahrens als Nachrichtenablaufdiagramm;
- Fig. 5: ein Ausführungsbeispiel eines erfindungsgemäßen Mobilfunkendgeräts in Blockdarstellung; und
- Fig. 6: ein Ausführungsbeispiel eines erfindungsgemäßen Netzzugangsknotens in Blockdarstellung.

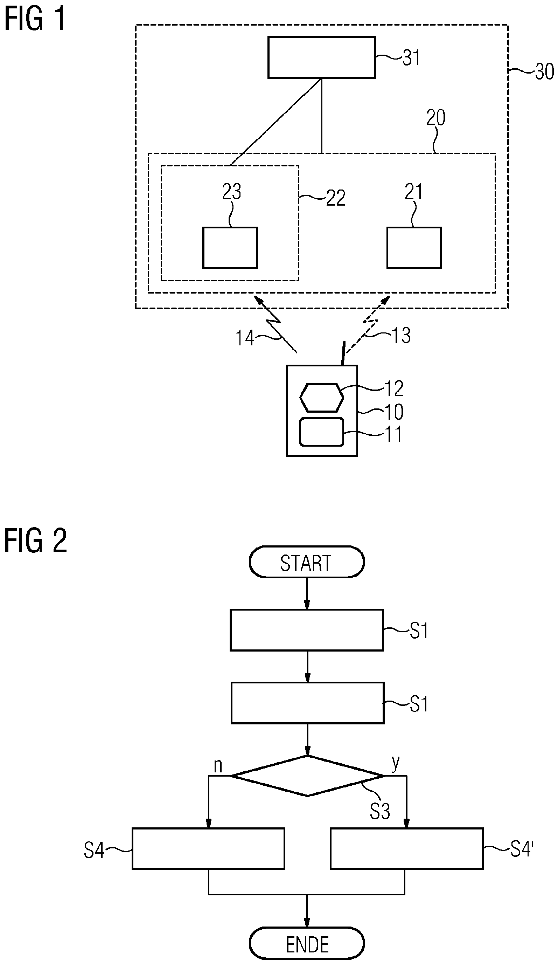

Fig. 1 zeigt ein Mobilfunknetzwerk 30, das beispielsweise entsprechend einem 5G-Mobilfunkstandard des dritten Generationspartnerschaftsprojekts 3GPP als zellulares Mobilfunknetz aufgebaut ist und betrieben wird. Ein solches Mobilfunknetz 30 umfasst mindestens ein erstes Teilnetz 20, das bevorzugt in einem ausgedehnten geografischen Gebiet für ein Mobilfunkendgerät 10 über eine erste Funkverbindung 13 zu einem Zugangsknoten 21 zugänglich ist. Das Mobilfunknetzwerk 30 umfasst des Weiteren mindestens ein zweites Teilnetz 22, das bevorzugt in einem geografisch engeren Bereich, beispielsweise einer Werkshalle oder einem Industriepark, für das Mobilfunkendgerät 10 über eine zweite Funkverbindung 14 zu einem Zugangsknoten 22 zugänglich ist.

Dabei weisen die erste Funkverbindung 13 und die zweite Funkverbindung 14 unterschiedliche Funkübertragungsparameter auf, beispielsweise werden unterschiedliche Frequenzbereiche, unterschiedliche Kanalbreite, unterschiedliche zulässige Sendeleistung, unterschiedliche zulässige Duty-Cycle und/oder unterschiedliche Modulationsverfahren verwendet. Im ersten Teilnetz 20 werden beispielsweise Funktechnologien entsprechend dem LTE oder früheren 2G oder 3G-Mobilfunkstandards bereitgestellt. Im zweiten Teilnetz sind typische Funktechnologien gemäß dem vierten Generation-Mobilfunkstandard LTE, Funktechnologien entsprechend dem WLAN oder WiMAX-Standard und neue Funktechnologien gemäß einem 5G-Standard verfügbar, beispielsweise 5G New Radio.

Das Mobilfunkendgerät 10 kann insbesondere ein Mobilfunkmodem sein, das die Funkschnittstelle konfiguriert und die Funkverbindung 13, 14 beispielsweise für ein oder mehrere mit dem Mobilfunkendgerät verbundene Geräte bereitstellt. Ein Nutzer des Mobilfunkendgeräts 10, der bevorzugt auch Teilnehmer des Mobilfunknetzes 30 ist, kann beispielsweise ein Gerät sein oder aber eine menschliche Person sein. Das Mobilfunkendgerät 10 bzw. sein Nutzer verwendet jeweils einen Berechtigungsnachweis vom ersten Typ 11, um sich bei einer Zugangsanforderung gegenüber dem ersten Teilnetz 20 zu authentifizieren. Der Berechtigungsnachweis vom ersten Typ wird üblicherweise von einem Teilnehmeridentifizierungsmodul, auch als SIM-Karte oder UICC (Universal integrated circuit card) bezeichnet, bereitgestellt und umfasst bevorzugt ein Geheimnis und mindestens eine kryptographische Funktion zur Authentifizierung des Mobilfunkendgerätes beim Zugang zum ersten Teilnetz 20 des Mobilfunknetzes 30. Zum Zugang für das zweite Teilnetz 22 wird hingegen ein Berechtigungsnachweis vom Typ 2 12 verwendet. Der Berechtigungsnachweis vom Typ 2 12 unterscheidet sich vom Berechtigungsnachweis vom Typ 1 11 und ist beispielsweise ein digitales Zertifikat, das zur Authentifizierung des Mobilfunkendgerätes 30 beim Zugang zum zweiten Teilnetz 22 des Mobilfunknetzes 30, verwendet wird. Die Zugangsberechtigung wird dabei von einem Zugangsserver 31 überprüft, der beispielsweise für ein oder mehrere erste und/oder zweite Teilnetze den Netzzugang überwacht.

Figur 2 zeigt nun das erfindungsgemäße Verfahren, das im Mobilfunkendgerät 10 oder auch im Netzzugangsknoten durchgeführt wird. Ausgehend von einem Startzustand START, bei dem eine Zugangsanforderung des Mobilfunkendgerätes 10 an ein ausgewähltes Teilnetz vorliegt. Die Zugangsanforderung kann beispielsweise bei einem Einschalten oder Aktivieren des Mobilfunkgeräts oder auch im laufenden Betrieb wiederholt generiert werden und vorliegen. Die Zugangsanforderung kann insbesondere bei einer Netzzugangsauthentisierung des Mobilfunkgeräts generiert werden bzw. vorliegen.

Im ersten Verfahrensschritt S1 wird der für das ausgewählte Teilnetz vorbestimmte Berechtigungsnachweis ermittelt. Das Teilnetz kann dabei beispielsweise direkt ausgewählt werden. Das Teilnetz kann aber auch beispielsweise durch einen angeforderten Dienst und eine Zuordnung eines Teilnetzes zur Bereitstellung des Dienstes ausgewählt werden.

Im Verfahrensschritt S2 wird der Berechtigungsnachweis analysiert und als Berechtigungsnachweis des Typs 1 oder des Typs 2 kategorisiert und somit der Typ des vorbestimmte Berechtigungsnachweises ermittelt. Dabei können mehrere unterschiedliche Berechtigungsnachweise vom Typ 1 oder vom Typ 2 bekannt sein. Abhängig vom ermittelten Typ, siehe S3, werden die mit dem Berechtigungsnachweis verbundenen Funkübertragungsparameter ermittelt und im Mobilfunkendgerät aktiviert, siehe Verfahrensschritt S4 bzw. S4'.

Wird dabei im Verfahrensschritt S3 ein Berechtigungsnachweis vom Typ 1 ermittelt, so werden entsprechend in Schritt S4' die Funkübertragungsparameter für das erste Teilnetz des Mobilfunknetzwerks aktiviert. Wird ein Berechtigungsnachweis vom Typ 2 ermittelt, so wird im Verfahrensschritt S4 beispielsweise aus dem Berechtigungsnachweis vom Typ 2 der vorbestimmter Satz von Funkübertragungsparametern, der dem Berechtigungsnachweis vom Typ 2 zugeordnet ist, ausgewählt und aktiviert. Anschließend geht das Verfahren in einen Endzustand, in dem die Funkverbindung entsprechend den Funkübertragungsparametern aufgebaut ist, über.

Ein Berechtigungsnachweis vom Typ 2 ist insbesondere als ein digitales Zertifikat, beispielsweise gemäß dem X.509-Standard ausgebildet. Das digitale Zertifikat als Berechtigungsnachweis vom Typ 2 kann explizit einen Funkübertragungsparameter aufweisen. Der Funkübertragungsparameter kann beispielsweise einen konkret Funkübertragungsparametersatz umfassen, der für eine Funkverbindung zum zweiten Netzwerk aktiviert wird. Im Berechtigungsnachweis vom Typ 2 kann der Funkübertragungsparameter als beschränkende Information vorliegen, die angibt, mit welchen Funktechnologien und Funkparametern dieses Zertifikat für einen Mobilfunknetzwerkzugang genutzt werden darf. Beschränkende Information ist beispielsweise durch Randwerte eines erlaubten Frequenzbandes gegeben. Der Funkübertragungsparameter kann aber auch eine Positivinformation angegeben sein, der zulässige Funkübertragungsparameter definiert.

Ebenso ist es möglich, dass bei nicht explizit definierten Funkübertragungsparametern ein vorbestimmter Satz von Übertragungsparametern dem Berechtigungsnachweis zugeordnet ist. Dieser vorbestimmte Satz an Funkübertragungsparametern wird dann angewendet. Des Weiteren kann ein geographisches Gebiet und/oder Zeiträume angegeben sein, auf die sich diese Funkübertragungsparameter beziehen. Zusätzlich können auch ein Netzwerkname, beispielsweise entsprechend einem Service Set Identifier SSID in einem WLAN, oder eine Kennung von Basisstationen, beispielsweise eines Access Points, enthalten sein.

Im Anwendungsbereich von zweiten Teilnetzen eines beispielsweise 5G-Mobilfunknetzes, ist nicht davon auszugehen, dass ein Nutzer die erforderlichen technischen Kenntnisse hat, die Funkübertragungsparameter korrekt zu konfigurieren und einzustellen. Durch das beschriebene Verfahren ist es nicht erforderlich, dass ein Nutzer selbst am Mobilfunkendgerät konfiguriert, welche Funktechnologien bzw. Funkübertragungsparameter unterstützt werden sollen. Somit kann das Mobilfunkendgerät die Information zu seinen technischen Fähigkeiten abhängig von den aktivierten Funkübertragungsparametern anpassen. Das heißt, dass das Mobilfunkendgerät keine feste, statische Information zu den eigenen aus Implementierungssicht grundsätzlich unterstützten technischen Funkübertragungsmöglichkeiten bereitstellt, sondern nur zu den von dem Berechtigungsnachweis abhängigen tatsächlichen Funkübertragungsparametern bereitstellt.

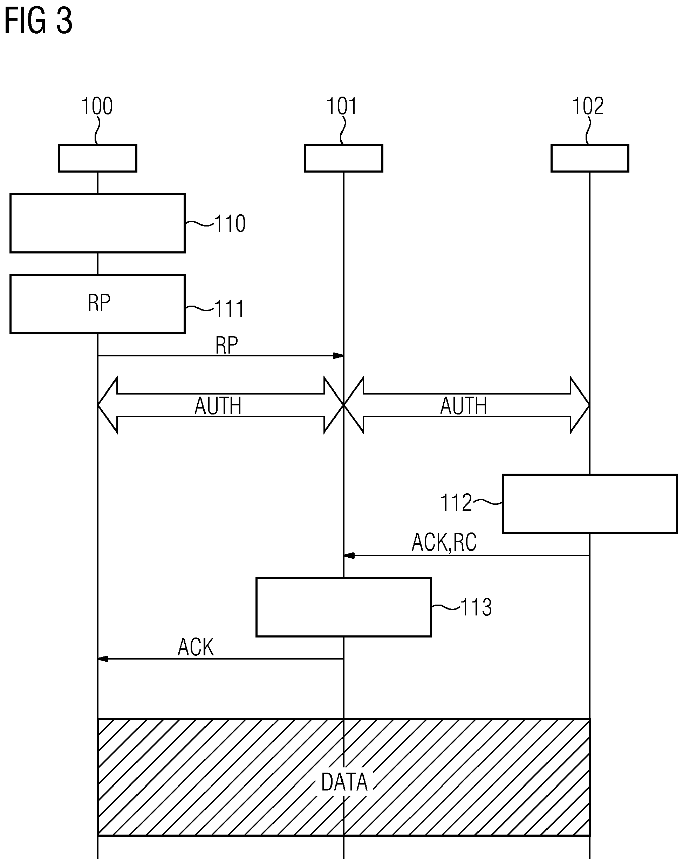

Bei der Zugangsanforderung des Mobilfunkendgeräts an ein ausgewähltes Teilnetz mit einem Berechtigungsnachweis von Typ 2 wird insbesondere eine Netzwerkzugangsauthentisierung über ein Authentisierungsprotokoll durchgeführt. In Figur 3 ist eine erste Variante in Form eines Nachrichtenablaufdiagramms zwischen einem Mobilfunkendgerät 100, einem Netzzugangsknoten 101 eines zweiten Teilnetzes und einem Netzzugangsserver 103 eines Mobilfunknetzwerks dargestellt.

Das Mobilfunkendgerät 100 bzw. ein Nutzer des Mobilfunkendgerätes 100 generiert eine Zugangsanforderung zum zweiten Teilnetz. Das Mobilfunkendgerät 100 ermittelt daraufhin einen zugeordneten Berechtigungsnachweis vom Typ 2, beispielsweise ein digitales Zertifikat, aus, siehe 110. Das Mobilfunkendgerät 100 konfiguriert sein Funkübertragungsmodul abhängig von den im ausgewählten Berechtigungsnachweis vom Typ 2 enthaltenen Funkübertragungsparametern RP, siehe 111. Weiterhin stellt das Mobilfunkendgerät 100 eine entsprechende Information zu den Funkübertragungsparametern RP des Mobilfunkendgeräts 100 dem Netzzugangsknoten 101 bereit.

Das Mobilfunkendgerät 100 führt eine Netzzugangsauthentisierung AUTH, beispielsweise unter Verwendung der EAP-TLS Authentisierungs- und Schlüsselvereinbarungsprotokolls, durch und sendet dafür den ermittelten Berechtigungsnachweis vom Typ 2, insbesondere ein digitales Zertifikat über den Netzzugangsknoten 101 an den Netzzugangsserver 102.

Im Netzzugangsserver 102 wird eine Authentisierung des Mobilfunkendgeräts bzw. seines Nutzers basierend auf dem Berechtigungsnachweis vom Typ 2 beispielsweise gemäß einem EAP-TLS Protokoll, durchgeführt. Dabei ermittelt der Netzzugangsserver 102 zusätzlich die Funkübertragungsparameter RC des verwendeten Berechtigungsnachweis vom Typ 2 bzw. digitalen Zertifikats, siehe 112. Bei einer erfolgreicher Authentisierung ACK sendet der Netzzugangsserver 102 eine Authentisierungsbestätigung ACK und die Funkübertragungsparameter RC dem Netzzugangsknoten 101.

Der Netzzugangsknoten 101 überprüft, ob die vom Mobilfunkendgerät 100 gesendeten Funkübertragungsparameter RF mit den vom Netzzugangsserver 102 empfangenen Funkübertragungsparameter RC übereinstimmen, siehe 113. Bei einem positiven Prüfergebnis sendet der Netzzugangsknoten 101 eine Authentisierungsbestätigung ACK an das Mobilfunkendgerät 100. Bei einem negativen Prüfergebnis, d.h. keine Übereinstimmung der Funkübertragungsparameter RF mit den Funkübertragungsparameter RC wird die Zugangsanforderung zurückgewiesen und die Funkverbindung DATA wird nicht aufgebaut.

In einer zweiten Variante werden die Funkübertragungsparameter RC dem Zugangsnetzwerk, insbesondere der Netzzugangsknoten 101, noch während der EAP-basierten Authentisierung vom Netzzugangsserver 102 bereitgestellt.

In einer dritten Variante extrahiert das Zugangsnetzwerk selbst, insbesondere der Netzzugangsknoten 101, die Funkübertragungsparameter RC aus dem Berechtigungsnachweis vom Typ 2, indem es eine bei der Netzzugangsauthentisierung AUTH zwischen dem Mobilfunkendgerät 100 und dem Netzzugangsserver 102 übermittelte Authentisierungsnachricht auswertet, beispielsweise durch eine sogenannte Deep-Paket-Inspection. Diese Variante hat den Vorteil, dass das Funkzugangsnetz die Funkübertragungsparameter unabhängig von einem Netzzugangsserver prüfen kann.

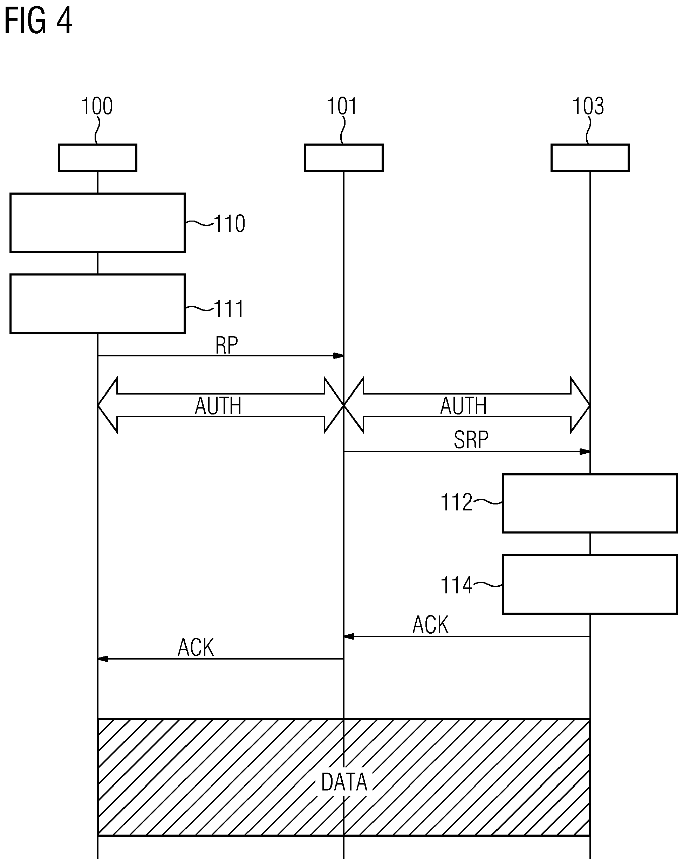

In Figur 4 ist eine Variante gezeigt, bei der der Funkzugangsknoten 101 die vom Mobilfunkendgerät 100 für eine zweite Funkverbindung verwendeten Funkübertragungsparameter SRC ermittelt und dem Netzzugangsserver 102 bereitstellt. Der Netzzugangsserver 102 ermittelt in 112 die Funkübertragungsparameter aus dem Berechtigungsnachweis vom Typ 2 und prüft in 114, ob die vom Mobilfunkendgerät 100 verwendete Funkübertragungskonfiguration SRP gemäß den im verwendeten Berechtigungsnachweis vom Typ 2 enthaltenen Funkübertragungsparameter RC zulässig sind. Bei einem positiven Prüfungsergebnis wird eine erfolgreiche Authentifizierung ACK an das Mobilfunkendgerät übermittelt.

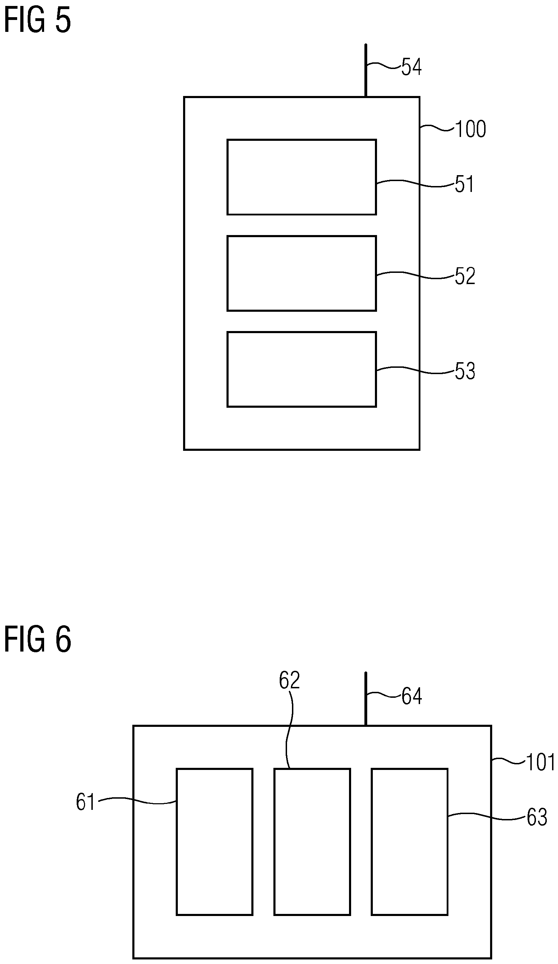

Figur 5 zeigt ein Mobilfunkendgerät 100 umfassend eine Speichereinheit 51, in der beispielsweise die Berechtigungsinformation vom Typ 1 und Berechtigungsnachweis vom Typ 2 speichert. Das Mobilfunkendgerät 100 umfasst des Weiteren eine Funksteuerungseinheit 52, die bei einer Zugangsanforderung zum ausgewählten Teilnetz den vorbestimmter Berechtigungsnachweis und die damit verknüpften Funkübertragungsparameterermittelt. Das Mobilfunkendgerät 100 umfasst des Weiteren eine Funkverbindungseinheit 53, die eine erste oder zweite Funkverbindung entsprechend den ermittelten Funkübertragungsparametern konfiguriert und über eine Antenne 54 bereitstellt.

Figur 6 zeigt einen Netzzugangsknoten 101, mit einer Auswerteeinheit 61, in der die vom Mobilfunkendgerät 100 konfigurierten Funkübertragungsparameter entsprechend den oben beschriebenen Varianten ermittelt und/oder ausgewertet werden bzw. die vom Netzzugangsserver 102 bereitgestellten, aus dem Berechtigungsnachweis ermittelten Funkübertragungsparameter mit den vom Mobilfunkendgerät 100 konfigurierten Funkübertragungsparameter überprüft. Entsprechend dem Überprüfungsergebnis oder auch einer Rückmeldung von einem Netzzugangsserver 102 werden die Funkübertragungsparameter in einer Funkverbindungseinheit 63 konfiguriert und aktiviert und eine Verbindung über die Antenne 64 entsprechend den Funkübertragungsparametern ausgegeben. Der Netzugangsknoten 101 umfasst des Weiteren eine Funksteuerungseinheit 62, die bei einer Zugangsanforderung zum ausgewählten Teilnetz den vorbestimmter Berechtigungsnachweis und die damit verknüpften Funkübertragungsparameter ermittelt und aktiviert.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Konfiguration einer Funkverbindung (13) zwischen einem Mobilfunkendgerät (10) und einem Mobilfunknetzwerk (30), wobei das Mobilfunknetzwerk (30) mindestens ein erstes Teilnetz (20) enthält, das mit einem Berechtigungsnachweis von mindestens einem ersten Typ (11) zugänglich ist, und mindestens ein zweites Teilnetz (11) enthält, das mit einem Berechtigungsnachweis von mindestens einem zweiten Typ (12) zugänglich ist, und eine erste Funkverbindung (13) zu einem ersten Teilnetz (20) und eine zweite Funkverbindung (14) zu einem zweiten Teilnetz (22) unterschiedliche Funkübertragungsparameter aufweisen, wobei bei einer Zugangsanforderung des Mobilfunkendgeräts (10) an ein ausgewähltes Teilnetz
- ein für die Zugangsanforderung zum ausgewählten Teilnetz vorbestimmter Berechtigungsnachweis ermittelt wird (Sl),
- der Typ des vorbestimmten Berechtigungsnachweises ermittelt wird (S2), und
- mindestens ein Funkübertragungsparameter abhängig vom ermittelten Typ des vorbestimmten Berechtigungsnachweises ausgewählt und aktiviert (S4, S4') wird.

2. Verfahren nach Anspruch 1, wobei der erste Berechtigungsnachweis (11) und der zweite Berechtigungsnachweis (12) zur Verwendung in unterschiedlichen Authentisierungsprotokollen ausgebildet sind.

3. Verfahren nach einem der vorhergehenden Ansprüche, wobei die erste Funkverbindung (13) und die zweite Funkverbindung (14) mit einem gleiche Funkübertragungsverfahren bereitgestellt werden.

4. Verfahren nach einem der vorhergehenden Ansprüche, wobei das Mobilfunknetzwerk (30) zellulares Mobilfunknetz ist, insbesondere ein 5G Netzwerk gemäß einem Standard eines dritten Generations-Partnerschafts-Projekts 3GPP ist und das erste Teilnetz (20) ein öffentliches Mobilfunknetzwerk und das zweite Teilnetz (22) ein nicht-öffentliches Mobilfunknetzwerk ist.

5. Verfahren nach einem der vorhergehenden Ansprüche, wobei die Zugangsanforderung bei einem Start und/oder im laufenden Betrieb eines Mobilfunkendgerätes (10) oder eines Netzzugangsknotens (21, 23) oder eines mit dem Mobilfunkendgerät verbundenen Maschine und/oder bei einer Authentisierung des Mobilfunkendgerätes (10) bei einem Teilnetz (20, 22) ausgeführt wird.

6. Verfahren nach einem der vorhergehenden Ansprüche, wobei der Berechtigungsnachweis vom zweiten Typ (12) ein digitales Zertifikat ist und zur Authentisierung des Mobilfunkendgeräts (10) bei einem Zugang zum Mobilfunknetzwerk (30) verwendet wird.

7. Verfahren nach einem der vorhergehenden Ansprüche, wobei der Berechtigungsnachweis vom zweiten Typ (12) eine beschränkende Information zu nicht erlaubten Funkübertragungsparametern enthält und entsprechende Funkübertragungsparameter nicht aktiviert werden.

8. Verfahren nach einem der Ansprüche 1 bis 6, wobei der Berechtigungsnachweis vom zweiten Typ (12) eine Positiv-Information zu erlaubten Funkübertragungsparametern enthält und lediglich erlaubte Funkübertragungsparameter aktiviert werden.

9. Verfahren nach einem der Ansprüche 6 bis 8, wobei der Berechtigungsnachweis vom zweiten Typ (12) eine zusätzliche Information zu einem geographischen Anwendungsbereich und/oder einem zeitlichen Anwendungsbereich der Funkübertragungsparameter enthält.

10. Verfahren nach einem der Ansprüche 1 bis 6, wobei eine vorbestimmte Information, die einen vorbestimmten Satz von Funkübertragungsparametern aufweist, dem Berechtigungsnachweis vom Typ 2 (12) zugeordnet ist und der vorbestimmte Satz von Funkübertragungsparametern aktiviert wird, wenn im Berechtigungsnachweis vom Typ 2 (12) keine Information zu den Funkübertragungsparametern enthalten ist.

11. Verfahren nach einem der vorhergehenden Ansprüche, wobei ein Netzzugangsserver (31) bei einer Netzzugangsauthentisierung des Mobilfunkendgeräts (10) die Funkübertragungsparameter aus dem Berechtigungsnachweis (11, 12) vom Typ 2 ermittelt, und wobei ein Netzwerkzugang nur dann gewährt wird, wenn die Funkübertragungsparameter der Funkverbindung (13) vom Mobilfunkendgerät (10) zum Netzzugangsknoten (21) die Funkübertragungsparameter den ermittelten Funkübertragungsparametern des Berechtigungsnachweises (11, 12) vom Typ 2 entsprechen.

12. Verfahren nach Anspruch 11, wobei der Netzzugangsknoten (21) die Funkübertragungsparameter der Funkverbindung (13) zum Mobilfunkendgerät (10) ermittelt, und die ermittelten Funkübertragungsparameter dem Netzzugangsserver (31) oder dem Netzzugangsknoten (21) zum Vergleich mit den Funkübertragungsparametern aus dem Berechtigungsnachweis vom Typ 2 bereitstellt.

13. Mobilfunkendgerät (10) zur Konfiguration einer Funkverbindung (13, 14) zu einem Mobilfunknetzwerk (30), wobei das Mobilfunknetzwerk (30) mindestens ein erstes Teilnetz (20) enthält, das mit einem Berechtigungsnachweis von mindestens einem ersten Typ (11) zugänglich ist, und mindestens ein zweites Teilnetz (22) enthält, das mit einem Berechtigungsnachweis von mindestens einem zweiten Typ (12) zugänglich ist, und eine erste Funkverbindung (13) zu einem ersten Teilnetz (20) und eine zweite Funkverbindung (14) zu einem zweiten Teilnetz (22) unterschiedliche Funkübertragungsparameter aufweisen, umfassend mindestens einen Prozessor, der derart ausgebildet ist, bei einer Zugangsanforderung des Mobilfunkendgeräts (10) an ein ausgewähltes Teilnetz (20, 22)
- einen für die Zugangsanforderung zum ausgewählten Teilnetz (20, 22) vorbestimmten Berechtigungsnachweis zu ermitteln,
- den Typ (11, 12) des vorbestimmten Berechtigungsnachweises zu ermitteln, und
- mindestens einen Funkübertragungsparameter abhängig vom ermittelten Typ des verwendeten Berechtigungsnachweises auszuwählen und zu aktivieren.

14. Netzzugangsknoten (21, 23), der eine Funkverbindung (13, 14) von einem Mobilfunkendgerät (10) netzseitig terminiert, zur Konfiguration einer Funkverbindung (13, 14) zwischen einem Mobilfunkendgerät (10) und einem Mobilfunknetzwerk (30), wobei das Mobilfunknetzwerk (30) mindestens ein erstes Teilnetz (20) enthält, das mit einem Berechtigungsnachweis von mindestens einem ersten Typ (11) zugänglich ist, und mindestens ein zweites Teilnetz (22) enthält, das mit einem Berechtigungsnachweis von mindestens einem zweiten Typ (12) zugänglich ist, und eine erste Funkverbindung (13) zu einem ersten Teilnetz (20) und eine zweite Funkverbindung (14) zu einem zweiten Teilnetz (22) unterschiedliche Funkübertragungsparameter aufweisen, umfassend mindestens einen Prozessor, der derart ausgebildet ist, bei einer Zugangsanforderung des Mobilfunkendgeräts (10) an ein ausgewähltes Teilnetz (20, 22)
- einen für die Zugangsanforderung zum ausgewählten Teilnetz (20, 22) vorbestimmten Berechtigungsnachweis zu ermitteln,
- den Typ (11, 12) des vorbestimmten Berechtigungsnachweises zu ermitteln, und
- mindestens einen Funkübertragungsparameter abhängig vom ermittelten Typ des verwendeten Berechtigungsnachweises auszuwählen und zu aktivieren.

15. Computerprogrammprodukt, umfassend ein Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 12 durchzuführen.
